# EUROPÄISCHE PATENTSCHRIFT

(11) **EP 1 137 699 B1**
(45) Veröffentlichungstag und Bekanntmachung des Hinweises auf die Patenterteilung: **18.09.2002**
(21) Anmeldenummer: 99963401.7
(22) Anmeldetag: 07.12.1999
(51) Int. Cl.: C08J 9/00, C08J 9/12, C08L 25/04

(54) **FLAMMGESCHÜTZTE POLYSTYROLSCHAUMSTOFFE**
FLAME-PROOFED POLYSTYRENE FOAMED MATERIALS
MOUSSES DE POLYSTYRENE IGNIFUGEES

(30) Priorität: 09.12.1998 DE 19856759
(43) Veröffentlichungstag der Anmeldung: 04.10.2001
(73) Patentinhaber: BASF AKTIENGESELLSCHAFT, 67056 Ludwigshafen (DE)
(72) Erfinder: DIETZEN, Franz-Josef, D-67071 Ludwigshafen (DE); GLÜCK, Guiscard, D-55129 Mainz (DE); EHRMANN, Gerd, D-67146 Deidesheim (DE); TURZNIK, Gerhard, D-67269 Grünstadt (DE); ALICKE, Gerhard, D-67549 Worms (DE); HAHN, Klaus, D-67281 Kirchheim (DE); KLATT, Martin, D-68165 Mannheim (DE); BRAUN, Karlheinz, D-67063 Ludwigshafen (DE)
(86) Internationale Anmeldenummer: EP9909555
(87) Internationale Veröffentlichungsnummer: WO00034367

(56) Entgegenhaltungen:
- EP-A- 0 729 999
- EP-A- 0 863 175
- DE-A- 19 531 489

## Beschreibung

Die Erfindung betrifft extrudierte Schaumstoffplatten mit einer Dichte von 20 bis 200 g/l und einem Querschnitt von mindestens 50 cm² auf Basis von Styrolpolymerisaten, die mit halogenfreien Flammschutzmitteln ausgerüstet sind.

Extrudierte Polystyrolschaumstoffe (XPS) werden in großem Maß zum Isolieren von Gebäuden und Gebäudeteilen eingesetzt. Für diesen Zweck müssen sie flammfest ausgerüstet sein. Die zur Flammfestmachung von extrudierten Polystyrolschaumstoffen üblicherweise verwendeten Flammschutzmittel enthalten Halogene. Aus Umweltschutzgründen soll der Einsatz von Halogenen in Schaumstoffen vermieden werden.

Der Erfindung lag daher die Aufgabe zugrunde, extrudierte Polystyrolschaumstoffe bereitzustellen, die die für den Einsatz im Bauwesen notwendige Brandklasse B 2 erreichen und unter Verzicht auf halogenhaltige Flammschutzmittel hergestellt wurden.

Diese Aufgabe wurde gelöst durch die Verwendung von 1 bis 12 Gew.-%, vorzugsweise 3 bis 8 Gew.-%, Blähgraphit, gegebenenfalls zusammen mit 1 bis 12 Gew.-%, vorzugsweise 3 bis 8 Gew.-%, einer Phosphorverbindung, jeweils bezogen auf das Styrolpolymerisat, als Flammschutzmittel.

In der Literatur wird Blähgraphit in Kombination mit rotem Phosphor bzw. phosphorhaltigen Verbindungen als Flammschutzmittel für kompaktes Polystyrol beschrieben. Bei früheren Versuchen ist aber festgestellt worden, daß halogenfreie Flammschutzmittel, die bei kompaktem Polystyrol einsetzbar sind, nicht bei der Schaumherstellung verwendbar sind, da entweder der Schäumprozeß stark gestört oder die Wärmeformbeständigkeit des Schaumstoffs zu weit abgesenkt wird. Dies ist jedoch überraschenderweise bei der vorliegenden Erfindung nicht der Fall.

Die US-A 3,574,644 beschreibt den Zusatz von Blähgraphit als Flammschutzmittel für brennbare Materialien, u.a. für Schaumstoffe, in denen der Blähgraphit in Mengen von 20 bis 40 Gew.-% enthalten sein soll. Der Blähgraphit kann entweder vor der Expansion in das expandierbare Material eingearbeitet werden, oder dieses kann nach der Expansion mit dem Blähgraphit beschichtet werden. XPS-Platten mit 1 bis 12 Gew.-% Blähgraphit sind nicht beschrieben.

Die JP-A 03-167 236 beschreibt einen Polystyrol-Schaum, der als Flammschutzmittel Blähgraphit enthält, dessen Oberfläche mit einem filmbildenden Harz vollständig beschichtet wurde. Diese Beschichtung wird als notwendig bezeichnet, um Korrosion von Verarbeitungsmaschinen durch im Blähgraphit stets enthaltene Säuren zu vermeiden; sie erfordert aber einen zusätzlichen, aufwendigen Arbeitsschritt. Neben dem Blähgraphit kann der Polystyrol-Schaum noch übliche Flammschutzmittel, wie z.B. halogenierte organische Phosphate, enthalten. Der Polystyrol-Schaum wird vorzugsweise durch Vermischen von Polystyrol-Schaumpartikeln mit einem Haftvermittler und dem beschichteten Blähgraphit hergestellt; daneben kann er auch durch Extrusion einer Mischung von Polystyrol, einem Treibmittel und dem beschichteten Blähgraphit erhalten werden. Überraschenderweise hat sich nun gezeigt, daß bei XPS-Platten, die 1 bis 12 Gew.-% Blähgraphit als Flammschutzmittel enthalten, eine Beschichtung des Blähgraphits mit einem Harzfilm nicht erforderlich ist.

Aufgrund seiner Schichtgitterstruktur ist Graphit in der Lage, spezielle Formen von Einlagerungsverbindungen zu bilden. In diesen sogenannten Zwischengitterverbindungen sind Fremdatome oder -moleküle in z.T. stöchiometrischen Verhältnissen in die Räume zwischen den Kohlenstoffatomen aufgenommen worden. Diese Graphitverbindungen, z.B. mit Schwefelsäure als Fremdmolekül, die auch in technischem Maßstab hergestellt werden, werden als Blähgraphit bezeichnet. Die Dichte dieses Blähgraphits liegt im Bereich von 1,5 bis 2,1 g/cm³, die mittlere Teilchengröße bei 20 bis 2000 µm, insbesondere bei 30 bis 1000 µm.

Als Phosphorverbindungen können halogenfreie anorganische oder organische Phosphate, Phosphite oder Phosphonate sowie roter Phosphor, eingesetzt werden. Bevorzugte Phosphorverbindungen sind beispielsweise Triphenylphosphat, Diphenylkresylphosphat, Ammoniumpolyphosphat, Melaminphosphat, Resorcinoldiphenylphosphat oder Dimethylmethylphosphonat.

Die erfindungsgemäßen Schaumstoffplatten werden hergestellt, indem man ein Gemisch aus dem Styrolpolymerisat, 3 bis 15 Gew.-% eines flüchtigen Treibmittels und 1 bis 12 Gew.-%. Blähgraphit sowie gegebenenfalls 1 bis 12 Gew.-% einer Phosphorverbindung bei Temperaturen oberhalb des Schmelzpunktes des Styrolpolymerisats extrudiert und verschäumt. Das Gewichtsverhältnis von Blähgraphit und Phosphorverbindung beträgt vorzugsweise 20:80 bis 80:20.

Styrolpolymerisate im Sinne dieser Erfindung sind Polystyrol und Mischpolymerisate des Styrols, die mindestens 80 Gew.-% Styrol einpolymerisiert enthalten. Als Comonomere kommen z.B. in Betracht a-Methylstyrol, kernhalogenierte Styrole, kernalkylierte Styrole, Acrylnitril, Ester der (Meth)acrylsäure von Alkoholen mit 1 bis 8 C-Atomen, N-Vinylverbindungen wie Vinylcarbazol, Maleinsäureanhydrid oder auch geringe Mengen an Verbindungen, die zwei polymerisierbare Doppelverbindungen enthalten wie Butadien, Divinylbenzol oder Butandioldiacrylat. Die Styrolpolymerisate können 1 bis 20 %, bezogen auf ihr Gewicht, anderer thermoplastischer Polymerisate, z.B. Polyacrylate, Polyacrylnitril sowie Dienkautschuke zugemischt enthalten.

Als Treibmittel können die üblichen flüchtigen organischen Verbindungen wie Fluorchlorkohlenwasserstoffe, Fluorkohlenwasserstoffe, Kohlenwasserstoffe, Alkohole, Ketone und Ether verwendet werden. Bevorzugt sind jedoch halogenfreie Treibmittel und Treibmittelgemische, z.B. anorganische Gase wie Kohlendioxid, Stickstoff, Argon und Ammoniak, gegebenenfalls im Gemisch mit Alkoholen, Kohlenwasserstoffen und Ethern.

Bevorzugte Treibmittelgemische sind daher:
a) 1 bis 100 Gew.-% Kohlendioxid,
b) bis zu 95 Gew.-% eines Ethers aus der Gruppe Dimethylether, Methylethylether und Methylvinylether,
c) bis zu 60 Gew.-% eines Alkohols oder Ketons mit einem Siedepunkt zwischen 56 und 100°C, und
d) bis zu 30 Gew.-% eines aliphatischen C₃-C₆-Kohlenwasserstoffs

Besonders bevorzugte Treibmittelgemische bestehen aus:
a) 20 bis 90 Gew.-% Kohlendioxid
b) 1 bis 30 Gew.-% Dimethylether,
c) 0 bis 60 Gew.-% Ethanol, und
d) bis zu 10 Gew.-% eines aliphatischen C₃-C₆-Kohlenwasserstoffs,
bzw. aus:
a) 20 bis 95 Gew.-% Kohlendioxid
c) 80 bis 5 Gew.-% Ethanol und
d) 0 bis 10 Gew.-% eines aliphatischen C₃-C₆-Kohlenwasserstoffs

Auch Kohlendioxid allein kann eingesetzt werden.

Die Treibmittel werden in einer Menge von 3 bis 15 Gew.-%, vorzugsweise 4 bis 12 Gew.-%, bezogen auf das Styrolpolymerisat, verwendet.

Als weitere übliche Zusatz- und/oder Hilfsstoffe können der Thermoplastmatrix Antistatika, Stabilisatoren, Farbstoffe, Füllstoffe, athermane Partikel, wie Ruß, Graphit oder Metallpulver und/oder Keimbildner in üblichen Mengen zugesetzt werden.

Die in den folgenden Beispielen genannten Teile und Prozente beziehen sich auf das Gewicht:

Eine Mischung aus 100 Teilen Polystyrol und den in der Tabelle angegebenen Teilen Flammschutzmittel wurde einem Extruder mit einem inneren Schneckendurchmesser von 53 mm kontinuierlich zugeführt und aufgeschmolzen. Durch eine in dem Extruder angebrachte Einlaßöffnung wurde ein Treibmittelgemisch von 3,5 Teilen C02 und 2,1 Teilen Ethanol kontinuierlich in den Extruder eingedrückt und in die Schmelze eingemischt. Das im Extruder gleichmäßig geknetete Schmelze-Treibmittelgemisch wurde sodann einem zweiten Extruder mit einem Schneckendurchmesser von 90 mm zugeführt und dort während einer Verweilzeit von ca. 10 min auf die zum Schäumen notwendige Temperatur abgekühlt. Diese gekühlte Schmelze wurde sodann durch eine Schlitzdüse mit 70 mm Breite in die Atmosphäre extrudiert. Der dabei entstehende Schaum wurde durch ein Werkzeug zu Platten mit 30 mm Dicke und 150 mm Breite geformt. So wurden gleichmäßige, geschlossenzellige und formstabile Schaumstoffkörper erhalten.

An den so erhaltenen Schaumstoffplatten wurde die Brennbarkeit B2 nach DIN 4102 bestimmt.

Die Ergebnisse sind in der Tabelle festgehalten.

**Tabelle**

| Beispiel | Blähgraphit | roter Phosphor | TPP | B2 | selbstverlöschend |
|---|---|---|---|---|---|
| 1 | - | - | 10 | nein | nein |
| 2 | - | 10 | - | nein | nein |
| 3 | 8 | - | - | ja | nein |
| 4 | 6 | 4 | 1,5 | ja | ja |
| 5 | 6 | 6 | - | ja | ja |
| 6 | 6 | - | 6 | ja | ja |
| TPP - Triphenylphosphat | | | | | |

Der eingesetzte Blähgraphit war CALLOTEK 600 der Fa. Kropfmühl AG.

## Patentansprüche

1. Extrudierte Schaumstoffplatten mit einer Dichte von 20 bis 200 g/l und einem Querschnitt von mindestens 50 cm² auf Basis von Styrolpolymerisaten, **dadurch gekennzeichnet, daß** sie als Flammschutzmittel 1 bis 12 Gew.-%, bezogen auf das Styrolpolymerisat, Blähgraphit enthalten, welcher keine Oberflächenbeschichtung aufweist.

2. Schaumstoffplatten nach Anspruch 1, **dadurch gekennzeichnet, daß** sie zusätzlich 1 bis 12 Gew.-%, bezogen auf das Styrolpolymerisat, einer halogenfreien Phosphorverbindung enthalten.

3. Schaumstoffplatten nach Anspruch 2, **dadurch gekennzeichnet, daß** die Phosphorverbindung roter Phosphor, ein organisches oder anorganisches Phosphat, Phosphit oder Phosphonat ist.

4. Schaumstoffplatten nach Anspruch 2, **dadurch gekennzeichnet, daß** die Phosphorverbindung Triphenylphosphat, Diphenylkresylphosphat, Melaminphosphat, Ammoniumpolyphosphat oder Diphenylphosphat ist.

5. Schaumstoffplatten nach Anspruch 1, **dadurch gekennzeichnet, daß** der Blähgraphit eine Dichte von 1,5 bis 2,1 g/cm³ und eine mittlere Teilchengröße (längster Durchmesser) von 20 bis 2000 µm aufweist.

6. verfahren zur Herstellung der Schaumstoffplatten nach Anspruch 1, **dadurch gekennzeichnet, daß** man ein Gemisch aus einem Styrolpolymerisat, 3 bis 15 Gew.-% eines flüchtigen Treibmittels und 1 bis 12 Gew.-% Blähgraphit sowie gegebenenfalls 1 bis 12 Gew.-% einer Phosphorverbindung, jeweils bezogen auf das Styrolpolymerisat, bei Temperaturen oberhalb des Schmelzpunktes des Styrolpolymerisates extrudiert und verschäumt.

7. Verfahren nach Anspruch 6, **dadurch gekennzeichnet, daß** ein halogenfreies Treibmittel eingesetzt wird.

## Claims

1. An extruded foam slab with a density of from 20 to 200 g/l and with a cross-sectional area of at least 50 cm², and based on styrene polymers, wherein from 1 to 12% by weight, based on the styrene polymer,!of expanded graphite, which has no surface coating, is present as flame retardant.

2. A foam slab as claimed in claim 1, wherein from 1 to 12% by weight, based on the styrene polymer, of a halogen-free phosphorus compound is also present.

3. A foam slab as claimed in claim 2, wherein the phosphorus compound is red phosphorus, or an organic or inorganic phosphate, phosphite or phosphonate.

4. A foam slab as claimed in claim 2, wherein the phosphorus compound is triphenyl phosphate, diphenyl cresyl phosphate, melamine phosphate, ammonium polyphosphate or diphenyl phosphate.

5. A foam slab as claimed in claim 1, wherein the expanded graphite has a density of from 1.5 to 2.1 g/cm³ and an average particle size (longest diameter) of from 20 to 2000 µm.

6. A process for producing the foam slabs as claimed in claim 1, which comprises extruding and foaming a mixture made from a styrene polymer, from 3 to 15% by weight of a volatile blowing agent and from 1 to 12% by weight of expanded graphite, and also, if desired, from 1 to 12% by weight of a phosphorus compound, based, in each case, on the styrene polymer, at above the melting point of the styrene polymer.

7. A process as claimed in claim 6, wherein a halogen-free blowing agent is used.

## Revendications

1. Plaques de matière mousse extrudées à une densité de 20 à 200 g/l et une section d'au moins 50 cm², à base de polymères du styrène, **caractérisées par le fait qu'**elles contiennent en tant qu'agent ignifugeant, en proportions de 1 à 12 % du poids du polymère du styrène, du graphite gonflé qui ne porte pas de revêtement superficiel.

2. Plaques de mousse selon la revendication 1, **caractérisées par le fait qu'**elles contiennent en outre un dérivé du phosphore exempt d'halogène en proportions de 1 à 12 % du poids du polymère du styrène.

3. Plaques de mousse selon la revendication 2, **caractérisées par le fait que** le dérivé du phosphore consiste en phosphore rouge, un phosphate, phosphite ou phosphonate organique ou inorganique.

4. Plaques de mousse selon la revendication 2, **caractérisées par le fait que** le dérivé du phosphore est le phosphate de triphényle, le phosphate de diphényle et de crésyle, le phosphate de mélamine, un polyphosphate d'ammonium ou du phosphate de diphényle.

5. Plaques de mousse selon revendication 1, **caractérisées en ce que** le graphite gonflé a une densité de 1,5 à 2,1 g/cm³ et une dimension de particule moyenne (plus long diamètre) de 20 à 2000 µm.

6. Procédé pour la fabrication des plaques de mousse selon la revendication 1, **caractérisé par le fait que** l'on extrude et fait gonfler en mousse un mélange d'un polymère du styrène, de 3 à 15 % en poids d'un agent porogène volatil et de 1 à 12 % en poids de graphite gonflé, avec le cas échéant 1 à 12 % en poids d'un dérivé du phosphore, toutes ces proportions se rapportant au poids du polymère du styrène, à des températures supérieures au point de fusion du polymère du styrène.

7. Procédé selon la revendication 6, **caractérisé par le fait que** l'on utilise un agent porogène exempt d'halogène.
